# EUROPÄISCHE PATENTANMELDUNG

(11) **EP 1 243 791 A2**
(43) Veröffentlichungstag der Anmeldung: **25.09.2002**
(21) Anmeldenummer: 02006388.9
(22) Anmeldetag: 21.03.2002
(51) Int. Cl.: F03D 11/02, F03D 9/00

(54) **Drehmomentübertragungsvorrichtung für eine Windkraftanlage**

(30) Priorität: 23.03.2001 DE 10114609
(71) Anmelder: Enron Wind GmbH, 48499 Salzbergen (DE)
(72) Erfinder: Weitkamp, Roland, 49191 Belm (DE)
(74) Vertreter: Patentanwälte Leinweber & Zimmermann

(57) **Zusammenfassung**

Die Erfindung betrifft eine Drehmomentübertragungsvorrichtung für eine einen mindestens ein Rotorblatt aufweisenden Rotor umfassende Windkraftanlage mit einem mindestens eine Getriebestufe aufweisenden Getriebe, dessen Eingangswelle an den Rotor und dessen Abtriebswelle an einen Aktivteil einer Arbeitsmaschine, insbesondere eines Generators, koppelbar ist, sowie eine Windkraftanlage mit einer derartigen Drehmomentübertragungsvorrichtung, wobei das Getriebe mindestens eine zweite an den Rotor koppelbare Getriebestufe mit einer an ein zweites Aktivteil des Generators koppelbaren und durch eine Drehung des Rotors gegenläufig zur ersten Abtriebswelle antreibbaren zweiten Antriebswelle aufweist.

## Beschreibung

Die Erfindung betrifft eine Drehmomentübertragungsvorrichtung für eine einen mindestens ein Rotorblatt aufweisenden Rotor umfassende Windkraftanlage mit einem mindestens eine Getriebestufe aufweisenden Getriebe, dessen Eingangswelle an den Rotor und dessen Abtriebswelle an einen Aktivteil einer Arbeitsmaschine, insbesondere eines Generators, koppelbar ist, sowie eine Windkraftanlage mit einer derartigen Drehmomentübertragungsvorrichtung.

Bei Windkraftanlagen wird die durch den Wind erzeugte Drehung des Rotors zur Stromerzeugung ausgenutzt. Dazu wird der Rotor an einen entsprechenden Generator gekoppelt. Die Rotordrehzahl moderner Windkraftanlagen mit einem Rotordurchmesser von 70 m oder mehr und einer Turmhöhe von 100 m oder mehr liegt in der Größenordnung von 15 bis 20 U/min. Wenn diese Rotordrehung direkt an das Aktivteil des Generators gekoppelt wird, werden zum Erhalt von Nennleistungen von 1 MW oder mehr Generatoren mit einem Durchmesser von 5 bis 6 Metern benötigt. Diese Generatoren müssen auf dem Turm der Windkraftanlage in einer Höhe von 100 m oder mehr mechanisch stabil gelagert werden. Das führt zu besonders aufwendigen und störanfälligen Konstruktionen. Angesichts dieser Probleme werden zur Ankopplung der Rotordrehung an den Generator üblicherweise Drehmomentübertragungsvorrichtungen der eingangs beschriebenen Art eingesetzt. Mit diesen Drehmomentübertragungsvorrichtungen wird die Rotordrehzahl mit einer Übersetzung von 30 bis 150 auf den Aktivteil des Generators übertragen. Zu diesem Zweck werden üblicherweise zwei- oder mehrstufige Planeten- und/oder Stirnradgetriebe eingesetzt. Derartige Getriebe sind in der WO 91/19916 und der WO 96/11338 beschrieben. Durch die damit erreichbare Übersetzung der Rotordrehung ist es möglich, zum Erhalt hoher Ausgangsleistungen von 1 MW oder mehr verhältnismäßig kleinbauende Generatoren einzusetzen. Derartige Generatoren können ohne größere Schwierigkeiten auch auf den hohen Türmen von Windkraftanlagen mechanisch stabil gelagert werden. Allerdings enthalten diese Getriebe zahlreiche schnellaufende Teile, wie Lager, Zahnräder und Dichtungen, die einem hohen Verschleiß unterliegen.

Angesichts dieser Probleme wird in der EP 0 811 764 B1 die Verwendung eines Schiffswellengenerators in einer Windkraftanlage mit einem einstufigen Planetengetriebe vorgeschlagen. Diese Lösung stellt einen Kompromiß aus noch akzeptabler Größe des Generators und einem noch akzeptablen Verschleiß der Einzelteile der Drehmomentübertragungsvorrichtung dar. Allerdings bereitet auch die Reparatur und Wartung eines Schiffswellengenerators auf dem Turm einer Windkraftanlage Probleme, die mit entsprechend hohen Kosten verbunden sind.

Angesichts der vorstehend erläuterten Probleme im Stand der Technik liegt der Erfindung die Aufgabe zugrunde, eine Drehmomentübertragungsvorrichtung der eingangs beschriebenen Art bereitzustellen, die unter Vermeidung eines übermäßigen Verschleißes den Einsatz verhältnismäßig kleiner Generatoren zum Erhalt von hohen Nennleistungen erlaubt.

Erfindungsgemäß wird diese Aufgabe durch eine Weiterbildung der bekannten Drehmomentübertragungsvorrichtungen für Windkraftanlagen gelöst, die im wesentlichen dadurch gekennzeichnet ist, daß das Getriebe mindestens eine zweite an den Rotor koppelbare Getriebestufe mit einer an ein zweites Aktivteil des Generators koppelbaren und durch eine Drehung des Rotors gegenläufig zur ersten Abtriebswelle antreibbaren zweite Abtriebswelle aufweist.

Diese Erfindung beruht auf der Erkenntnis, daß unter Vermeidung schnellaufender Getriebeteile ein vergleichsweise schnellaufender Generator eingesetzt werden kann, wenn der Generator als gegenläufiger Generator mit zwei rotierenden Aktivteilen ausgeführt ist, von denen das eine an eine Abtriebswelle der ersten Getriebestufe angekoppelt ist und das andere an ein gegenläufig zur ersten Abtriebswelle angetriebenen Abtriebswelle der zweiten Getriebestufe angekoppelt ist. Darüber hinaus wird bei der erfindungsgemäßen Drehmomentübertragungsvorrichtung der Verschleiß von Getriebeteilen auch noch dadurch reduziert, daß von der Idee der Leistungsverzweigung Gebrauch gemacht wird, bei der nur ein Teil der Rotorleistung auf die erste Getriebestufe übertragen wird, während der andere Teil nur auf die zweite Getriebestufe übertragen wird, wobei das Verhältnis der Leistungsverzweigung vorzugsweise im Bereich 30:70 bis 50:50 liegen kann. Dadurch wird nicht nur der Verschleiß von Getriebeteilen reduziert, sondern auch eine deutliche Reduzierung der Getriebekosten ermöglicht, weil die Getriebeteile wegen der Leistungsverzweigung kleiner gebaut werden können.

Bei der erfindungsgemäßen Drehmomentübertragungseinrichtung werden die Einzelübersetzungen der Getriebestufen in dem Generator durch die gegenläufig angetriebenen Aktivteile des Generators addiert, was je nach geometrischer Anordnung eine Drehzahlerhöhung um 50 bis 100% und somit eine beträchtliche Reduzierung der Generatorgröße ermöglicht. Im Sinne einer möglichst kompakten Ausführung der erfindungsgemäßen Vorrichtung hat es sich als besonders günstig erwiesen, wenn mindestens eine, vorzugsweise aber jede Getriebestufe des Getriebes in Form eines Planetengetriebes gebildet ist. Dabei kann der Rotor an den Planetenträger der ersten Getriebestufe und/oder das Hohlrad der zweiten Getriebestufe koppelbar sein. Zum Erhalt gegenläufiger angetriebener Aktivteile ist in diesem Fall das erste Aktivteil an das Sonnenrad der ersten Getriebestufe koppelbar und das zweite Aktivteil an das Sonnenrad der zweiten Getriebestufe koppelbar, wobei das Hohlrad der ersten Getriebestufe am Getriebegehäuse festgelegt ist, und/oder der Planetenträger der zweiten Getriebestufe am Getriebegehäuse festgelegt ist. Im Hinblick auf einen möglichst kompakten Aufbau des Getriebes der erfindungsgemäßen Vorrichtung hat es sich ferner als günstig erwiesen, wenn die einzelnen im Kraftfluß parallel geschalteten Getriebestufen räumlich hintereinander angeordnet sind. In diesem Fall verlaufen die Sonnenräder der Getriebestufen koaxial zueinander, wobei bei einer besonders bevorzugten Ausführungsform der Erfindung eines der Sonnenräder in Form einer von einer an das andere Sonnenrad gekoppelten Abtriebswelle durchsetzten Hohlwelle gebildet ist. Der Bauteileaufwand einer unter Verwendung einer erfindungsgemäßen Drehmomentübertragungsvorrichtung hergestellten Windkraftanlage kann reduziert werden, wenn eine der Getriebestufen zum Lagern des Rotors ausgelegt ist, wobei der Rotor vorzugsweise am Planetenträger dieser Getriebestufen lagerbar ist. An diesem Planetenträger sind bei einer bevorzugten Ausführungsform der Erfindung nur drei Planetenräder angebracht, um trotz eventueller elastischer Verformungen durch die Rotorbelastungen eine gute Tragfähigkeit der Planeten zu gewährleisten. Es ist jedoch bei entsprechender Auslegung, insbesondere bei Ausführungen mit einem separaten Rotorhauptlager auch vorstellbar, beide Getriebestufen mit vier oder mehr Planeten auszuführen.

Wie der vorstehenden Beschreibung einer erfindungsgemäßen Drehmomentübertragungsvorrichtung zu entnehmen ist, weist eine damit ausgestattete Windkraftanlage zweckmäßigerweise ein gegenläufigen Generator auf, bei dem sowohl der rotierende Außenring, als auch der rotierende Innenring mit je einer der gegenläufig angetriebenen Abtriebswellen des Getriebes verbunden ist. Dabei kann der Rotor über eine Welle an den Planetenträger der ersten Getriebestufe gekoppelt sein, wobei diese Welle an einem vorderen Hauptlager und über den Planetenträger der ersten Getriebestufe drehbar gelagert ist.

Zweckmäßigerweise ist der Generator als Synchrongenerator ausgeführt, wobei sowohl an den Einsatz von selbsterregten Synchrongeneratoren, als auch an den Einsatz von permanentmagneterregten Synchrongeneratoren gedacht ist.

Nachstehend wird die Erfindung anhand der Zeichnung erläutert, auf die hinsichtlich aller erfindungswesentlichen und in der Beschreibung nicht näher herausgestellten Einzelheiten ausdrücklich verwiesen wird. In der Zeichnung zeigt:

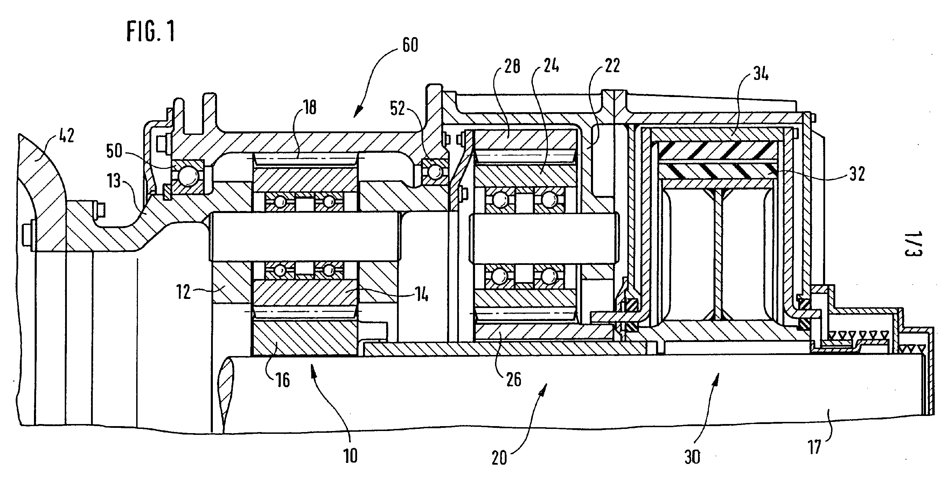

Fig.1 eine Schnittdarstellung einer erfindungsgemäßen Drehmomentübertragungsvorrichtung,
Fig. 2 eine erfindungsgemäße Windkraftanlage mit einer Drehmomentübertragungsvorrichtung nach Fig. 1 und
Fig. 3 eine erfindungsgemäße Windkraftanlage, bei der der Rotor über eine zusätzliche Welle an die Drehmomentübertragungsvorrichtung gekoppelt ist.

Die in der Zeichnung dargestellte Vorrichtung umfaßt im Wesentlichen eine erste Planetengetriebestufe 10, eine zweite koaxial und dahinter angeordnete Planetengetriebestufe 20 sowie einen Generator 30. Der Planetenträger 12 der ersten Planetengetriebestufe 10 weist einen drehfest mit der Nabe 42 eines Rotors verbundenen Ansatz 13 auf. Dabei ist die Nabe 42 und damit auch der Rotor über ein vorderes Lager 50, den Planetenträger 12 und ein hinteres Lager 52 drehbar an einem Getriebegehäuse 60 gelagert. Der Planetenträger 12 trägt insgesamt drei Planeten, von denen in der Zeichnung nur einer 14 dargestellt ist. Diese Planeten 14 kämmen einerseits ein an dem Getriebegehäuse 60 festgelegtes Hohlrad 18 und andererseits ein drehbar in dem Getriebegehäuse gelagertes Sonnenrad 16. Das Sonnenrad 16 ist drehfest an den Innenring 32 des gegenläufigen Generators 30 gekoppelt.

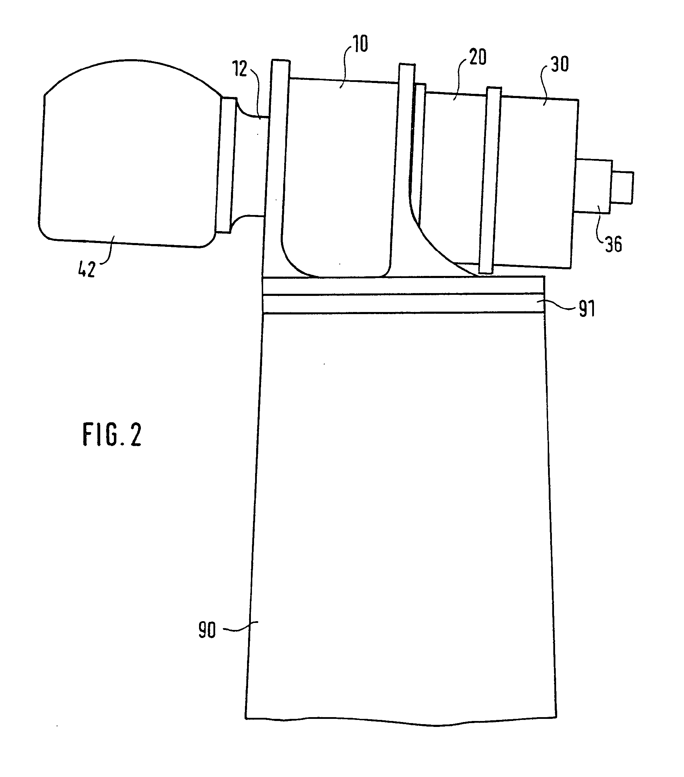

Die koaxial zur ersten Getriebestufe 10 angeordnete zweite Getriebestufe 20 weist ein drehfest mit dem Planetenträger 12 und damit auch mit der Hohlwelle 40 und der Nabe 42 verbundenes Hohlrad 28 sowie einen drehfest mit dem Getriebegehäuse 60 verbundenen Planetenträger 22 und ein zweites drehbar gelagertes Sonnenrad 26 auf. An dem Planetenträger 22 sind vier Planeten 24 drehbar gelagert, die einerseits das Hohlrad 28 und andererseits das Sonnenrad 26 kämmen. Das Sonnenrad 26 ist als koaxial zum Sonnenrad 16 verlaufende Hohlwelle ausgeführt und wird von der an das Sonnenrad 16 gekoppelte Abtriebswelle 17 durchsetzt. Das Sonnenrad 26 der zweiten Getriebestufe ist drehfest mit dem Außenring 34 des gegenläufigen Generators 30 verbunden. Auf diese Weise wird erreicht, daß eine über die Nabe 42 und den Planetenträger 12 leistungsverzweigt auf die erste Getriebestufe 10 und über das Hohlrad 28 auf die zweite Getriebestufe 20 übertragene Drehung des Rotors zu einer gegenläufigen Drehung der beiden Aktivteile 32 und 34 des Generators 30 führt. Die in der Zeichnung dargestellte Vorrichtung ist modular aufgebaut. Daher ist es trotz der Kompaktheit des Systems möglich, den Generator 30 und/oder die zweite Planetengetriebestufe 20 zu Reparaturzwecken mittels eines Bordkrans zu demontieren. Bei der in Fig. 2 dargestellten Ausführungsform einer erfindungsgemäßen Windkraftanlage ist die die erste Getriebestufe 10, sowie die zweite Getriebestufe 20 aufweisende Drehmomentübertragungsvorrichtung und den Generator 30 über ein Azimutlager 91 auf einem Turm 90 der Windkraftanlage gelagert. Die Nabe 42 des Rotors ist über den Ansatz 13 des ersten Plantetenträgers 12 an die Drehmomentübertragungsvorrichtung gekoppelt. Auf der der Nabe 42 entgegengesetzten Seite des Generators 30 ist die Schleifringeinheit 36 des Generators 30 angeordnet.

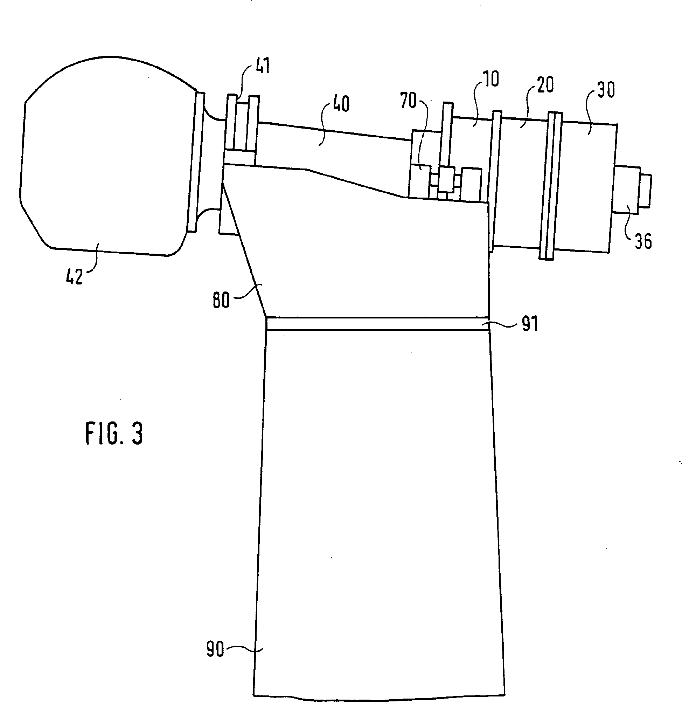

Die in Fig. 3 dargestellte Ausführungsform einer erfindungsgemäßen Windkraftanlage unterscheidet sich von der anhand der Fig. 2 erläuterten Ausführungsform dadurch, daß die Nabe 42 über eine Welle 40, die in einer besonders bevorzugten Ausführungsform der Erfindung als Hohlwelle ausgeführt sein kann, an die Drehmomentübertragungsvorrichtung gekoppelt ist, wobei diese Drehmomentübertragungsvorrichtung über eine Getriebeaufhängung 70 an einen Maschinenrahmen 80 der Windkraftanlage aufgehängt ist. Die Welle 40 ist über ein vorderes Hauptlager 41 und den Planetenträger 12 der ersten Getriebestufe 10 drehbar gelagert. Bei der in Fig. 3 dargestellten Ausführungsform der Erfindung ist der Maschinenrahmen 80 über ein Azimutlager 91 auf dem Turm 90 der Windkraftanlage gelagert.

Die erfindungsgemäße Vorrichtung ermöglicht somit eine sehr kompakte Bauweise des Maschinenkopfes einer Windkraftanlage, welches sich aufgrund der geringen Längserstreckung ideal mit der Idee des Helikopterdecks mit integriertem Container für die elektrotechnischen Komponenten kombinieren läßt, wie sie in der Deutschen Patentanmeldung 10013442.4-15 beschrieben ist.

## Patentansprüche

1. Drehmomentübertragungsvorrichtung für eine einen mindestens ein Rotorblatt aufweisenden Rotor umfassende Windkraftanlage mit einem mindestens eine Getriebestufe (10) aufweisenden Getriebe, dessen Eingangswelle (40) an den Rotor und dessen Abtriebswelle (17) an einen Aktivteil (32) einer Arbeitsmaschine, insbesondere eines Generators (30), koppelbar ist, **dadurch gekennzeichnet, daß** das Getriebe mindestens eine zweite an den Rotor koppelbare Getriebestufe (20) mit einer an ein zweites Aktivteil (34) des Generators (30) koppelbaren und durch eine Drehung des Rotors gegenläufig zur ersten Abtriebswelle antreibbaren zweiten Antriebswelle aufweist.

2. Drehmomentübertragungsvorrichtung nach Anspruch 1, **dadurch gekennzeichnet, daß** mindestens eine, vorzugsweise jede Getriebestufe des Getriebes in Form eines Planetengetriebes gebildet ist.

3. Drehmomentübertragungsvorrichtung nach Anspruch 2, **dadurch gekennzeichnet, daß** der Rotor an den Planetenträger (12) der ersten Getriebestufe (10) und/oder das Hohlrad (28) der zweiten Getriebestufe (20) koppelbar ist.

4. Drehmomentübertragungsvorrichtung nach Anspruch 2 oder 3, **dadurch gekennzeichnet, daß** das erste Aktivteil (32) an das Sonnenrad (16) der ersten Getriebestufe (10) koppelbar ist und das zweite Aktivteil (34) an das Sonnenrad (26) der zweiten Getriebestufe (20) koppelbar ist.

5. Drehmomentübertragungsvorrichtung nach einem der Ansprüche 2 bis 4, **dadurch gekennzeichnet, daß** das Hohlrad (18) der ersten Getriebestufe (10) am Getriebegehäuse (60) festgelegt, vorzugsweise einstückig damit gebildet ist, und/oder der Planetenträger (22) der zweiten Getriebestufe (20) am Getriebegehäuse festgelegt, vorzugsweise einstückig damit gebildet ist.

6. Drehmomentübertragungsvorrichtung nach einem der Ansprüche 2 bis 5, **dadurch gekennzeichnet, daß** die Sonnenräder (16, 26) der Getriebestufen (10, 20) koaxial zueinander verlaufen, wobei vorzugsweise eines der Sonnenräder (26) in Form einer von einer an das andere Sonnenrad (16) gekoppelten Abtriebswelle (17) durchsetzten Hohlwelle gebildet ist.

7. Drehmomentübertragungsvorrichtung nach einem der vorhergehenden Ansprüche, **dadurch gekennzeichnet, daß** eine der Getriebestufen zum Lagern des Rotors ausgelegt ist, wobei der Rotor vorzugsweise am Planetenträger (12) dieser Getriebestufe lagerbar ist.

8. Windkraftanlage mit einer Drehmomentübertragungsvorrichtung nach einem der vorhergehenden Ansprüche.

9. Windkraftanlage nach Anspruch 8, **gekennzeichnet durch** einen gegenläufigen Generator (30) bei dem sowohl der rotierende Außenring (34) als auch der rotierende Innenring (32) mit je einer der gegenläufig angetriebenen Abtriebswellen des Getriebes verbunden ist.

10. Windkraftanlage nach Anspruch 8 oder 9, **dadurch gekennzeichnet, daß** der Rotor über eine Welle (40) an den Planetenträger (12) der ersten Getriebestufe (10) gekoppelt ist, wobei diese Welle (40) an einem vorderen Hauptlager (41) und über den Planetenträger (12) der ersten Getriebestufe (10) drehbar gelagert ist.

11. Windkraftanlage nach den Ansprüchen 8 bis 10, **dadurch gekennzeichnet, daß** der Generator ein Synchrongenerator ist.

12. Windkraftanlage nach Anspruch 11, **dadurch gekennzeichnet, daß** der Generator ein fremderregter oder selbsterregter Synchrongenerator ist.

13. Windkraftanlage nach Anspruch 11, **dadurch gekennzeichnet, daß** der Generator ein permanentmagneterregter Synchrongenerator ist.

14. Windkraftanlage nach einem der Ansprüche 8 bis 13 mit einem Turm mit Gründung und einem auf dem Turm um die Vertikalachse drehbar gelagertem Maschinenrahmen, in dem der Generator und/oder das Getriebe mit einer eine im wesentlichen horizontal verlaufende Drehachse aufweisenden Eingangswelle aufgenommen ist.
